# EUROPEAN PATENT SPECIFICATION

(11) **EP 1 935 113 B1**
(45) Date of publication and mention of the grant of the patent: **02.03.2011**
(21) Application number: 05794266.6
(22) Date of filing: 14.10.2005
(51) Int. Cl.: H04W 52/50, H04W 52/26

(54) **METHOD FOR POWER CONTROL IN A WIRELESS STATION**
VERFAHREN ZUR LEISTUNGSREGELUNG IN EINER DRAHTLOSEN STATION
PROCÉDÉ DE COMMANDE DE PUISSANCE DANS UN POSTE SANS FIL

(43) Date of publication of application: 25.06.2008
(73) Proprietor: Telefonaktiebolaget L M Ericsson (Publ), 126 25 Stockholm (SE)
(72) Inventor: ALMGREN, Magnus, S-191 43 SOLLENTUNA (SE); FURUSKÄR, Anders, S-113 44 STOCKHOLM (SE)
(74) Representative: Kühn, Friedrich Heinrich
(86) International application number: PCT/SE2005/001540
(87) International publication number: WO 2007/043925

(56) References cited:
- EP-A2- 1 565 029
- US-A1- 2004 147 274
- ZAWODNIOK M. ET AL: 'A distributed power control MAC protocol for wireless ad hoc networks' WIRELESS COMMUNICATIONS AND NETWORKING CONFERENCE, 2004. WCNC. vol. 3, 21 March 2004 - 25 March 2004, pages 1915 - 1920, XP010708065
- CHEN Y. ET AL: 'Adaptive Power Controlled MAC Protocol in Mobile Ad Hoc Networks' IEEE 2002, COMMUNICATION SYSTEMS 2002 2002, pages 1076 - 1080, XP010629386
- KRUNZ M. ET AL: 'A Power Control Scheme for MANETs with Improved Throughput and Energy Consumption' 5TH INTERNATIONAL SYMPOSIUM ON WIRELESS PERSONAL MULTIMEDIA COMMUNICATIONS, 2002 vol. 2, 27 October 2002 - 30 October 2002, pages 771 - 775, XP010619194

## Description

### TECHNICAL FIELD OF THE INVENTION

The invention relates to a power control method in a wireless station and a wireless station implementing the method.

### DESCRIPTION OF RELATED ART

Medium Access Control (MAC) protocols control the usage of a shared transmission medium between different users. Desired characteristics of a MAC protocol include low delay, high throughput, and support for differentiated services.

Contention-Based (CB) MAC protocols are characterized by that users with data in their buffers may transmit without first assuring that the medium is not or will not be used by conflicting transmissions. Examples of CB MAC proposals include Aloha and Carrier Sense Multiple Access (CSMA) schemes. Benefits of CB MAC protocols are low delay and simplicity, while drawbacks include poor throughput due to collisions and difficulty to support service differentiation (different Quality of Service).

One way to improve throughput for CB MAC protocols is through using a so-called Request-to-Send (RTS) - Clear-to-Send (CTS) procedure (sometimes referred to as "acquiring the floor"). The basic principle is to precede every packet transmission with a shorter RTS-CTS phase. Thus a first wireless station desiring to transmit data to a second wireless station first send an RTS signal to the second wireless station which responds with a CTS signal indicating that it is ready to receive data. All other wireless stations receiving either the RTS or the CTS signal refrain from transmitting until the data exchange between the first and second wireless stations is finished. Collisions are hence avoided during the actual data exchange, but can still occur during the initial RTS-CTS phase. The initial RTS-CTS phase is however shorter than the data exchange, and the collision probability is reduced.

With a fixed CTS power, the area cleared by the CTS is constant. Clearing a large area is required when the transmitter and receiver are far apart, but is inefficient in case they are close. The article "A Power Controlled Multiple Access Protocol for Wireless Packet Networks" by J. P. Monks et al., INFOCOM 2001, proposes to mitigate this problem by setting the CTS power based on the received RTS power.

EP 1 565 029 discloses a mobile communication system including a base station that constitutes a cell and a mobile station that is present in the cell. The mobile station controls transmission power for a reservation request signal transmission according to the communication quality required. When the communication quality required by data packet transmission is high, the mobile station sets a transmission power of sufficient magnitude such that the base station can receive the reservation request signal. When the communication quality required by a data packet transmission is low, the mobile station sets a smallest possible transmission power at which the base station can receive the reservation request signal. Hence the probability of the base station receiving the reservation request is higher for data packet communications requiring high quality than for data packet communications requiring low quality.

US 2004/147274 discloses a communication system including a plurality of base stations or cell sites. Each cell site provides communication coverage over their respective cell coverage areas. A high priority system access technique is provided in which a mobile station instead of relying on its open loop power level routine to determine its power level for transmission of a system access request uses a high power level to transmit its access request such as its RACH preamble. The power level used for transmission of the RACH preamble can be dependent on the particular user and/or the application. By using a higher power level than the other mobile stations operating in the system, the mobile station has a higher probability of gaining system access and a channel grant in an expeditious fashion.

### SUMMARY OF THE INVENTION

The problem addressed by the present invention is providing improved support for service differentiation in wireless communication systems.

The problem is essentially solved by adjusting the transmission power of a signal locally reserving a wireless medium for communication of data based on Quality of Service requirements associated with said communication. More in particular, the problem is solved by a method according to claim 1 and a wireless station according to claim 9.

A general advantage afforded by the invention is that it provides improved support for service differentiation in wireless communication systems.

A more specific advantage afforded by the invention is that it provides a tool for controlling the conditions for radio reception at the location of a receiving wireless station based on Quality of Service requirements.

The invention will now be described in more detail with reference to exemplary embodiments thereof and also with reference to the accompanying drawings.

### BRIEF DESCRIPTION OF THE DRAWINGS

Fig. 1 is a schematic view of an example radio communication system in which the present invention may be advantageously employed.
Fig. 2 is a signal diagram illustrating a CTS-RTS procedure.
Fig. 3 is a flow diagram illustrating a basic power control method according to the invention
Fig. 4 is a flow diagram illustrating a first exemplary embodiment of a power control method according to the invention.
Fig. 5 is a block diagram illustrating first and second exemplary embodiments of a wireless station according to the invention.
Fig. 6 is a flow diagram illustrating a second exemplary embodiment of a power control method according to the invention.

### DETAILED DESCRIPTION OF THE EMBODIMENTS

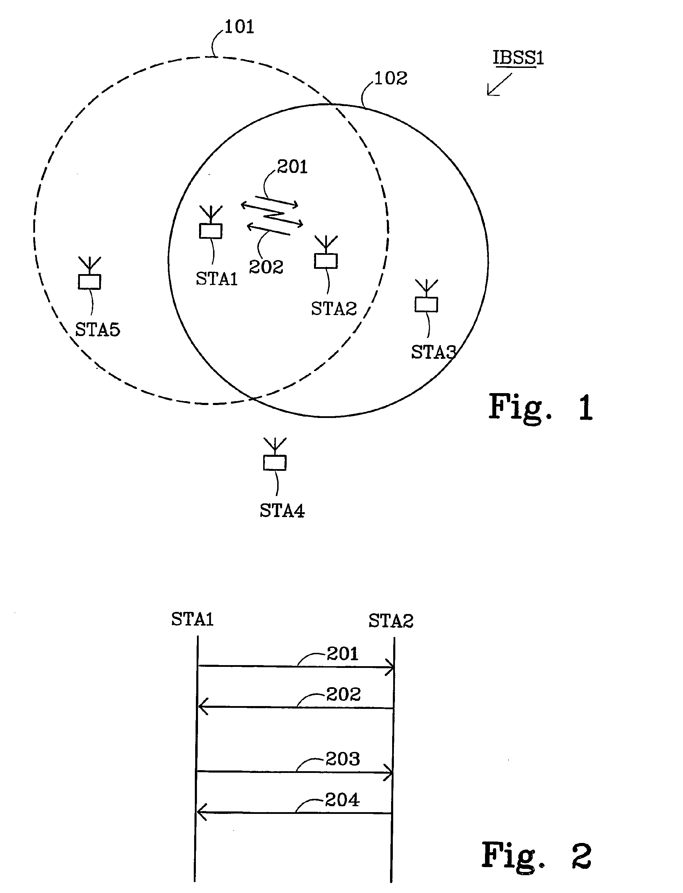

Fig. 1 illustrates a non-limiting example of a wireless communication system in which the present invention may be employed. The exemplary wireless communication system illustrated in Fig. 1 is a IEEE 802.11 Wireless Local Area Network (WLAN). The WLAN shown in Fig. 1 operates in so called adhoc mode and thus illustrates an Independent Basic Service Set (IBSS) IBSS1 comprising a number of wireless stations STA1-STA5 (e.g. portable or mobile stations).

The IEEE 802.11 conformant WLAN illustrated in Fig. 1 uses a Contention Based Medium Access Control (MAC) protocol. For improving the throughput a so called Request-to-Send (RTS) - Clear-to-Send (CTS) procedure is used when communicating data packets whose length exceed a predetermined threshold value. Fig. 2 is a signal diagram illustrating the use of the RTS/CTS procedure when communicating data from a first wireless station STA1 to a second wireless station STA2.

The first wireless station STA1 transmits a Request To Send control frame 201 addressed to the second wireless station STA2 and indicating that the first wireless station STA1 desires to transmit data to the second wireless station STA2.

In response to receiving the Request To Send control frame 201, the second wireless station STA2 transmits a Clear To Send control frame 202 to the first wireless station STA1 indicating that it is prepared to receive data from the first wireless station STA1.

Upon receiving the Clear To Send control frame 202, the first wireless station STA1 transmits the actual data in one or more data frames (or management frames) 203 to the second wireless station STA2.

Finally, the second wireless station STA2 optionally returns an Acknowledgement control frame 204 to the first wireless station STA1.

All wireless stations, except the first wireless station STA1 and the second wireless station STA2, which receive either the Request To Send control frame 101 or the Clear To Send control frame 102 refrain from transmitting until the data communication between the first wireless station STA1 and the second wireless station STA2 is finished.

The dashed circle 101 in Fig. 1 schematically illustrates the area within which the Request To Send control frame 101 transmitted by the first wireless station STA1 may be received while the circle 102 schematically represents the area within which the Clear To Send control frame transmitted by the second wireless station STA2 may be received. Thus, in the example scenario of Fig. 1, the Request To Send control frame 201 would be received by wireless station STA5 while the Clear To Send control frame 202 would be received by the wireless station STA3 and hence the wireless stations STA5 and STA3 would refrain from transmitting during this instance of data communication between the first wireless station STA1 and the second wireless station STA2. Wireless Station STA4, which received neither the Request To Send control frame 201 nor the Clear To Send control frame 202, could however begin transmitting during the data communication between the first wireless station STA1 and the second wireless station STA2. Thus the Request To Send control frame 201 and Clear to Send control frame 202 locally reserves the wireless medium in the areas schematically represented by circles 101 and 102 respectively.

The need to support service differentiation, i.e. different Quality of Service, has become increasingly important in recent years. As a result, the 802.11e revision of the IEEE 802.11 specifications have introduced mechanisms providing improved support for service differentiation in IEEE 802.11 Wireless Local Area Networks. The Quality of Service support in the Contention-based channel access (medium access) method of IEEE 802.11e, referred to as Enhanced Distributed Coordination Function (EDCF), is provided by the introduction of access categories (ACs) for different services. IEEE 802.11e defines four different access categories, voice, video, best effort and background. Access category specific medium contention parameters are defined so as to give priority to higher prioritized access categories over lower prioritized access categories when contending for access to the wireless medium.

The signal-to-interference ratio experienced by a receiving wireless station has a very significant impact on the ability of supporting higher Quality of Service requirements in terms of e.g. throughput, delay, reliability of communication etc. The present invention provides improved support for service differentiation in wireless communication systems and in particular allows the conditions for radio reception at the location of a receiving wireless station to be controlled based on Quality of Service requirements.

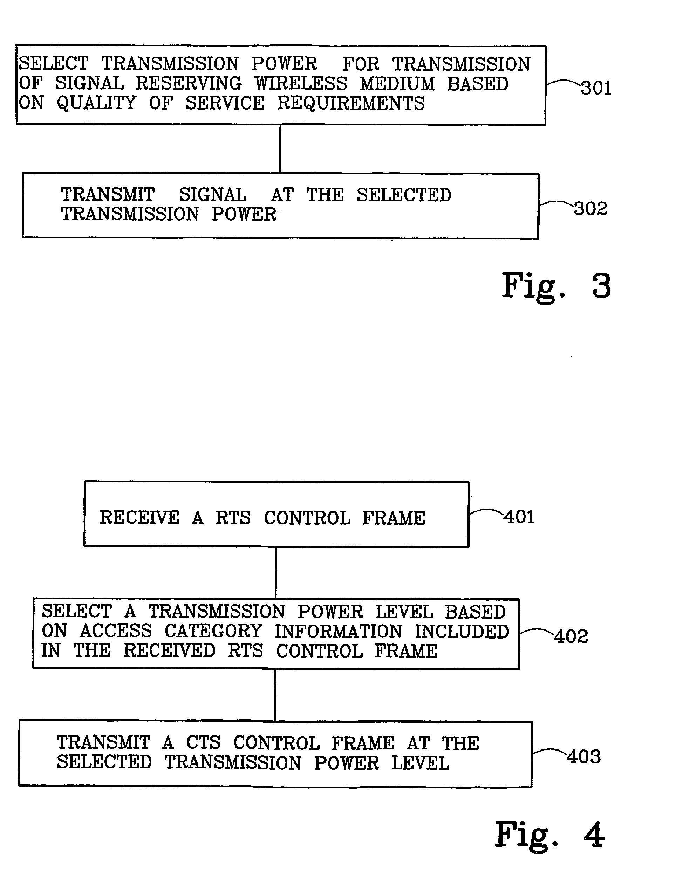

Fig. 3 illustrates a basic power control method in a wireless station according to the invention.

At step 301 a transmission power is selected for transmission of a signal locally reserving a wireless medium for communication of data to or from the wireless station. The transmission power is selected based on Quality of Service requirements associated with said communication of data.

At step 302 said signal is transmitted at said selected transmission power.

The power control method according to the invention provides a tool for controlling the signal-to-interference ratio a wireless station experiences when receiving a communication of data so as to adapt to Quality of Service requirements associated with said communication. The area in which the wireless medium is reserved corresponds to the area in which said signal reserving the wireless medium may be received, i.e. the wireless medium is available for other communications outside of this area. If the signal reserving the wireless medium is sent with higher transmission power, the signal will be received over a larger area, as compared to if said signal is transmitted with lower transmission power. Hence when said signal reserving the wireless medium is sent with higher power, the closest wireless station potentially causing interference will be located further away from the receiving wireless station as compared to when said signal is transmitted with less transmission power. Thus the signal-to-interference ratio experienced by the receiving wireless station during receipt of said communication of data will be higher when said signal reserving the medium is transmitted at a higher power as compared to when said signal reserving the medium is transmitted at a lower power. Higher signal-to-interference ratio experienced by the receiving wireless station makes it easier to meet higher Quality of Service requirements but also means that less capacity is available for supporting other communications. In contrast, a lower signal-to-interference ratio experienced by the receiving wireless station may still be adequate to support lower Quality of Service requirements while at the same time making more capacity available for supporting other communications.

In different embodiments of the invention, said signal reserving the wireless medium, whose transmit power is controlled based on Quality of Service requirements associated with an instance of data communication involving the wireless station, may be a signal addressed to a second wireless station indicating that the wireless station desires to transmit data to the second wireless station (e.g. a IEEE 802.11 Request to Send control frame) while in other embodiments said signal may be a signal (e.g. a IEEE 802.11 Clear to Send control frame) indicating that the wireless station is prepared to receive data from a second wireless station. The second alternative is used in preferred embodiments of the invention since it is more efficient (the receiving wireless station is located in the center of the area in which the wireless medium is being reserved), in particular in situations where the transmitting and receiving stations are located further away from each other.

Fig. 4 is a flow diagram illustrating a power control method according to a first exemplary embodiment of the invention.

At step 401 the wireless station receives a Request to Send control frame addressed to the wireless station indicating that a second wireless station desires to transmit data to the wireless station. In this embodiment of the invention, the IEEE 802.11 Request To Send control frame has been modified to include access category information indicating a Quality of Service associated with the data which the second wireless station desires to transmit to the wireless station. Since IEEE 802.11e supports 4 different access categories (voice, video, best effort and background), the modified Request to Send control frame could include a two bit field with unique values representing the different access categories. Alternatively one or more additional bits could be included to allow for an increased number of access categories in the future.

At step 402 the wireless station selects a transmission power level for transmission of a Clear to Send control frame based on the access category information received in the Request to Send control frame. There are several different alternatives on how transmission power level of the Clear to Send control frame may be selected based on the received access category information. In the first exemplary embodiment, two different power levels are used. For access categories voice and video, the maximum transmission power is selected, while for access categories best effort and background the transmission power is selected e.g. 3 dB less than the maximum transmission power.

At step 403, the Clear to Send control frame indicating that the wireless station is prepared to receive data is transmitted to the second wireless station at the selected transmission power level.

In the context of the exemplary scenario of Fig. 2, the method illustrated in Fig. 4 could be implemented in the second wireless station STA2 causing the transmission power of the Clear to Send control frame 202 to be controlled based on Quality of Service requirements associated with the transfer of the data frames 204.

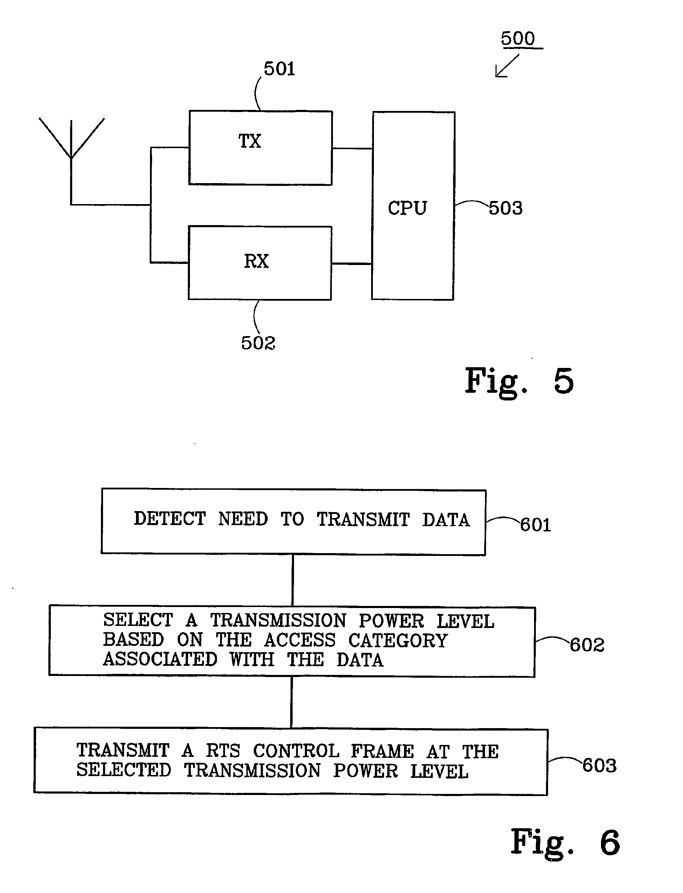

Fig. 5 schematically illustrates a wireless station 500 according to a first exemplary embodiment of the invention for implementing the method illustrated in Fig. 4.

The wireless station 500 includes a radio transmitter 501 and a radio receiver 502, both operable connected to digital data processing circuitry in the form of a programmable processor 503. The transmitter 501 is adapted to transmit signals according to the IEEE 802.11 specifications including Request to Send and Clear to Send control frames and other MAC Protocol Data Units while the receiver 502 is adapted to receive said signals. The processor 503 controls and coordinates the operations of the transmitter 501 and the receiver 502. The processor is in particular programmed to, in response to being informed by the receiver 502 of reception (step 401 in Fig. 4) of a Request to Send control frame addressed to the wireless station 500, selecting (step 402 in Fig. 4) a transmission power level based on the received access category information, and ordering the transmitter 501 to transmit (step 403 in Fig. 4) a Clear to Send control frame at the selected transmission power level.

Fig. 6 is a flow diagram illustrating a power control method according to a second exemplary embodiment of the invention.

At step 601 the wireless station detects a need to transmit data (one or more IEEE 802.11 data frames) to a second wireless station.

At step 602 the wireless station selects a transmission power level for transmission of a IEEE 802.11 Request to Send control frame based on Quality of Service requirements associated with said data about to be transmitted to the second wireless station. In this second exemplary embodiment of the invention it is assumed that the wireless station supports IEEE 802.11e and the four different access categories defined by IEEE 802.11e. If the data about to be transmitted is associated with one of the access categories voice or video, the maximum transmission power is selected while if the data is associated with one of the access categories best effort or background, the transmission power is selected e.g. 3 dB less than the maximum transmission power.

At step 603, the Request to Send control frame, indicating that the wireless station desires to transmit data to the second wireless station, is transmitted to the second wireless station at the selected transmission power level.

In the context of the exemplary scenario of Fig. 2, the method illustrated in Fig. 6 could be implemented in the first wireless station STA1 causing the transmission power of the Ready to Send control frame 201 to be controlled based on Quality of Service requirements associated with the transfer of the data frames 204.

Fig. 5 may serve also as an illustration of a second exemplary embodiment of a wireless station according to the invention for implementing the method illustrated in Fig. 6. However, in this second embodiment of a wireless station according to the invention, the processor 503 is programmed to, in response to detecting a need for communication of data to the second wireless station (step 601 in Fig. 6), selecting (step 602 in Fig. 6) a transmission power level based on the access category associated with the data about to be transmitted, and ordering the transmitter 501 to transmit (step 603 in Fig. 6) a Request to Send control frame at the selected transmission power level.

Apart from the exemplary embodiments of the invention disclosed above, there are several ways of providing rearrangements, modifications and substitutions of the disclosed embodiments resulting in additional embodiments of the invention.

There are many different alternatives for how Quality of Service requirements associated with communication of data involving a wireless station may be determined. In the first and second exemplary embodiments Quality of Service requirements are derived from the IEEE 802.11e Access Category associated with the data being communicated, i.e. from characteristics of the data itself. Such characteristics may be represented by IEEE 802.11e Access Categories or other Quality of Service classifications according to other protocols. Quality of Service requirements may be provided within the Medium Access Control protocol layer or from higher protocol layers (e.g. an application layer). In other embodiments, Quality of Service requirements may be derived from subscription information, or other information assigning different priorities to different stations, associated with the wireless station transmitting data and/or the wireless station receiving said data. Thus, if a communication of data involves a high priority wireless station (e.g. associated with a premium subscription), the signal reserving the wireless medium (e.g. a Request to Send or Clear to Send control frame) may be transmitted with a higher transmission power than if the communication of data involves a wireless station having lower priority (e.g. associated with an ordinary or a budget subscription). Deriving Quality of Service requirements from information assigning different priorities to different stations may be based on the priority of the wireless station transmitting the data and/or the priority of the wireless station receiving the data. When the priorities of both the transmitting and the receiving wireless station are considered, the transmission power selected for transmission of the reservation signal may be based e.g. on the highest, the lowest or a combined priority determined from the priorities of both wireless stations involved in the data communication. It is of course also possible to derive Quality of Service requirements associated with communication of data from a combination of characteristics of the data itself and subscription information or other information assigning different priorities to different wireless stations.

There are a multitude of different options for how to relate transmission power for transmission of a signal reserving a wireless medium for communication of data to different Quality of Service requirements associated with said communication of data. In the first and second exemplary embodiments of the invention, the transmission power levels for transmission of the Clear to Send and Request to Send control frames respectively were selected based on the Access Category associated with the data being communicated. In these exemplary embodiments, for data associated with access categories video and voice, said Clear to Send and Request to Send control frames are transmitted at a higher transmission power than data associated with access categories best effort and background. In other embodiments, it would of course be possible to select different transmission power levels for each different access category or use one transmission power level for one access category (e.g. voice) and another transmission power level for all other access categories. Generally, selecting the transmission power for transmission of a signal reserving the wireless medium would include discriminating between at least two different transmission power levels or transmission power offsets associated with different Quality of Service requirements. Defining appropriate transmission power levels or transmission power offsets associated with different Quality of Service can be done e.g. based on simulations or calculations accounting for how Quality of Service requirements translates into required Signal-to-Interference ratios at the location of a receiving wireless station. As an example, different bit rates may be translated into different required Signal-to-Interference (SIR) ratios using Shannons formula (according to which the bit rate corresponds to ∼log₂ (1+SIR) e.g. in order to support a doubling of the bit rate, at least a 3 dB increase in Signal-to-Interference ratio would be required) and the transmission power of a Clear to Send control frame may be selected accordingly.

In the first and second exemplary embodiments of the invention, wireless stations not involved in the data communication as the transmitting or receiving party but receiving either the Request To Send or Clear to Send control frame reserving the wireless medium for said data communication (e.g. wireless stations STA3 and STA5 in Fig. 2) refrain from initiating transmissions during said data communication. Alternatively, such stations could be allowed to transmit at reduced power (as suggested e.g. in "MACA-BI (MACA By Invitation) A Receiver Oriented Access Protocol For Wireless Multihop Networks" by Talucci et al).

In the first and second exemplary embodiments of a wireless station according to the invention disclosed above, digital data processing circuitry in the form of a conventional programmable processor is used to perform the transmission power selecting steps. However in other embodiments, any digital data processing circuitry capable of performing said processing could be used, e.g. an ASIC, a discrete logic circuit etc. Programmable devices performing processing according to the invention, can be dedicated to this task or used also for processing related to other tasks.

Even though the invention in its first and second exemplary embodiments have been applied to IEEE 802.11 wireless stations, the invention may of course be applied also in other types of wireless stations supporting communication according to other types of protocols utilizing signals (e.g. Clear to Send/Request to Send) for reserving a wireless medium for communication of data to or from the wireless station. Such protocols may use a Clear to Send - Ready to Send procedure similar to IEEE 802.11, but may also use only a Clear to Send signal, without a preceding Request to Send signal, to invite others to transmit data (see e.g. "MACA-BI (MACA By Invitation) A Receiver Oriented Access Protocol For Wireless Multihop Networks" by Talucci et al).

## Claims

1. A power control method in a wireless station, said method comprising the steps of:
selecting (301, 402, 602) a transmission power for transmission of a signal (201, 202) locally reserving a wireless medium for communication of data to or from the wireless station, wherein the area in which the wireless medium is being reserved corresponds to the area in which said signal reserving the wireless medium may be received;
transmitting (302, 403, 603) said signal at said selected transmission power,
**characterized in that** said selecting is performed based on Quality of Service requirements associated with said communication of data.

2. A power control method according to claim 1, wherein said signal (201) is addressed to a second wireless station and indicating that the wireless station desires to transmit data to the second wireless station.

3. A power control method according to claim 2, wherein said signal is an IEEE 802.11 Request to Send control frame (201).

4. A power control method according to claim 1, wherein said signal (202) indicates that the wireless station is prepared to receive data from a second wireless station.

5. A power control method according to claim 4, wherein said signal is an IEEE 802.11 Clear to Send control frame (202).

6. A power control method according to any one of claims 4-5, wherein said signal (202) indicating that the wireless station is prepared to receive data from the second wireless station is transmitted in response to receiving a signal (201) from the second wireless station indicating that the second wireless station desires to transmit data to the wireless station.

7. A power control method according to any one of claims 1-6, wherein said Quality of Service requirements are derived at least in part from subscription information, wherein if the subscription information assigns a high priority to the wireless station, the signal reserving the wireless medium is transmitted with a higher transmission power than if the subscription information assigns a lower priority to the wireless station.

8. A power control method according to any one of claims 1-7, wherein said Quality of Service requirements are derived at least in part from characteristics of said data.

9. A wireless station (500) comprising:
a transmitter (501) for transmitting a signal (201, 202) locally reserving a wireless medium for communication of data to or from the wireless station, wherein the area in which the wireless medium is being reserved corresponds to the area in which said signal reserving the wireless medium may be received, **characterized in that** the wireless station further comprises digital data processing circuitry (503) operable connected to the transmitter and adapted to select a transmission power for transmission of said signal based on Quality of Service requirements associated with said communication of data.

10. A wireless station according to claim 9, wherein said signal (201) is addressed to a second wireless station and indicating that the wireless station desires to transmit data to the second wireless station.

11. A wireless station according to claim 10, wherein said signal is an IEEE 802.11 Request to Send control frame (201).

12. A wireless station according to claim 9, wherein said signal (202) indicates that the wireless station is prepared to receive data from a second wireless station.

13. A wireless station according to claim 12, wherein said signal is an IEEE 802.11 Clear to Send control frame (202).

14. A wireless station according to any one of claims 12-13, wherein said wireless station further comprises a receiver (502) and said signal (202) indicating that the wireless station is prepared to receive data from the second wireless station is transmitted in response to said receiver receiving a signal (201) from the second wireless station indicating that the second wireless station desires to transmit data to the wireless station.

15. A wireless station according to any one of claims 9-14, wherein said Quality of Service requirements are derived at least in part from subscription information, wherein if the subscription information assigns a high priority to the wireless station, the signal reserving the wireless medium is transmitted with a higher transmission power than if the subscription information assigns a lower priority to the wireless station.

16. A wireless station according to any one of claims 9-15, wherein said Quality of Service requirements are derived at least in part from characteristics of said data.

## Patentansprüche

1. Leistungsregelungsverfahren in einer drahtlosen Station, wobei das Verfahren folgende Schritte umfasst:
Auswählen (301, 402, 602) einer Übertragungsleistung zur Übertragung eines Signals (201, 202), das ein drahtloses Medium zur Datenkommunikation zu und von der drahtlosen Station lokal reserviert, worin der Bereich, in dem das drahtlose Medium reserviert wird, dem Bereich entspricht, in dem Signal empfangen werden kann, das das drahtlose Medium reserviert;
Übertragen (302, 403, 603) des Signals mit der ausgewählten Übertragungsleistung,
**dadurch gekennzeichnet, dass** das Auswählen auf der Basis von Dienstgüteanforderungen ausgeführt wird, die mit der Datenkommunikation assoziiert sind.

2. Leistungsregelungsverfahren nach Anspruch 1 , worin das Signal (201) an eine zweite drahtlose Station adressiert ist und anzeigt, dass die drahtlose Station Daten an die zweite drahtlose Station zu übertragen wünscht.

3. Leistungsregelungsverfahren nach Anspruch 2, worin das Signal ein IEEE 802.11-Sendeanforderungs-Steuerrahmen (201) ist.

4. Leistungsregelungsverfahren nach Anspruch 1, worin das Signal (202) anzeigt, dass die drahtlose Station bereit ist, Daten von einer zweiten drahtlosen Station zu empfangen.

5. Leistungsregelungsverfahren nach Anspruch 4, worin das Signal ein IEEE 802.11-Sendebereitschafts-Steuerrahmen (202) ist.

6. Leistungsregelungsverfahren nach einem der Ansprüche 4-5, worin das Signal (202), das anzeigt, dass die drahtlose Station bereit ist, Daten von der zweiten drahtlosen Station zu empfangen, als Antwort auf den Empfang eines Signals (201) von der zweiten drahtlosen Station übertragen wird, das anzeigt, dass die zweite drahtlose Station Daten an die drahtlose Station zu übertragen wünscht.

7. Leistungsregelungsverfahren nach einem der Ansprüche 1-6, worin die Dienstgüteanforderungen mindestens teilweise aus Subskriptionsinformation abgeleitet sind, worin, falls die Subskriptionsinformation der drahtlosen Station eine hohe Priorität zuweist, das das drahtlose Medium reservierende Signal mit einer höheren Übertragungsleistung übertragen wird als der Fall ist, falls die Subskriptionsinformation der drahtlosen Station eine niedrigere Priorität zuweist.

8. Leistungsregelungsverfahren nach einem der Ansprüche 1-7, worin die Dienstgüteanforderungen mindestens teilweise aus Charakteristiken der Daten abgeleitet sind.

9. Drahtlose Station (500), umfassend:
einen Sender (501) zum Übertragen eines Signals (201, 202), das ein drahtloses Medium zur Datenkommunikation zu und von der drahtlosen Station lokal reserviert, worin der Bereich, in dem das drahtlose Medium reserviert wird, dem Bereich entspricht, in dem das das drahtlose Medium reservierende Signal empfangen werden kann, **dadurch gekennzeichnet, dass** die drahtlose Station außerdem Schalttechnik (503) für Digitaldatenverarbeitung umfasst, die betriebsbereit an den Sender angeschaltet ist und dazu angepasst ist, eine Übertragungsleistung zur Übertragung des Signals auf der Basis von Dienstgüteanforderungen auszuwählen, die mit der Datenkommunikation assoziiert sind.

10. Drahtlose Station nach Anspruch 9, worin das Signal (201) an eine zweite drahtlose Station adressiert ist und anzeigt, dass die drahtlose Station Daten an die zweite drahtlose Station zu übertragen wünscht.

11. Drahtlose Station nach Anspruch 10, worin das Signal ein IEEE 802.11-Sendeanforderungs-Steuerrahmen (201) ist.

12. Drahtlose Station nach Anspruch 9, worin das Signal (202) anzeigt, dass die drahtlose Station bereit ist, Daten von einer zweiten drahtlosen Station zu empfangen.

13. Drahtlose Station nach Anspruch 12, worin das Signal ein IEEE 802.11-Sendebereitschafts-Steuerrahmen (202) ist.

14. Drahtlose Station nach einem der Ansprüche 12-13, worin die drahtlose Station außerdem einen Empfänger (502) umfasst und das Signal (202), das anzeigt, dass die drahtlose Station bereit ist, Daten von der zweiten drahtlosen Station zu empfangen, als Antwort darauf übertragen wird, dass der Empfänger ein Signal (201) von der zweiten drahtlosen Station empfängt, das anzeigt, dass die zweite drahtlose Station Daten an die drahtlose Station zu übertragen wünscht.

15. Drahtlose Station nach einem der Ansprüche 9-14, worin die Dienstgüteanforderungen mindestens teilweise aus Subskriptionsinformation abgeleitet sind, worin, falls die Subskriptionsinformation der drahtlosen Station eine hohe Priorität zuweist, das das drahtlose Medium reservierende Signal mit einer höheren Übertragungsleistung übertragen wird als der Fall ist, falls die Subskriptionsinformation der drahtlosen Station eine niedrigere Priorität zuweist.

16. Drahtlose Station nach einem der Ansprüche 9-15, worin die Dienstgüteanforderungen mindestens teilweise aus Charakteristiken der Daten abgeleitet sind.

## Revendications

1. Procédé de commande de puissance dans une station sans fil, ledit procédé comportant les étapes ci-dessous consistant à :
sélectionner (301, 402, 602) une puissance de transmission pour la transmission d'un signal (201, 202) réservant localement un support sans fil en vue de la communication de données vers ou depuis la station sans fil, dans lequel la zone dans laquelle le support sans fil est réservé correspond à la zone dans laquelle ledit signal réservant le support sans fil peut être reçu ;
transmettre (302, 403, 603) ledit signal en utilisant ladite puissance de transmission sélectionnée ;
**caractérisé en ce que** ladite étape de sélection est mise en oeuvre sur la base d'exigences de qualité de service associées à ladite communication de données.

2. Procédé de commande de puissance selon la revendication 1, dans lequel ledit signal (201) est adressé à une seconde station sans fil et indique que la station sans fil souhaite transmettre des données à la seconde station sans fil.

3. Procédé de commande de puissance selon la revendication 2, dans lequel ledit signal est une trame de commande « Invitation à émettre » selon les normes IEEE 802.11 (201).

4. Procédé de commande de puissance selon la revendication 1, dans lequel ledit signal (202) indique que la station sans fil est prête à recevoir des données en provenance d'une seconde station sans fil.

5. Procédé de commande de puissance selon la revendication 4, dans lequel ledit signal est une trame de commande « Prête à émettre » selon les normes IEEE 802.11 (202).

6. Procédé de commande de puissance selon l'une quelconque des revendications 4 et 5, dans lequel ledit signal (202) indiquant que la station sans fil est prête à recevoir des données en provenance de la seconde station sans fil est transmis en réponse à la réception d'un signal (201) en provenance de la seconde station sans fil indiquant que la seconde station sans fil souhaite transmettre des données à la station sans fil.

7. Procédé de commande de puissance selon l'une quelconque des revendications 1 à 6, dans lequel lesdites exigences de qualité de service sont dérivées, au moins en partie, d'informations d'abonnement, dans lesquelles, si les informations d'abonnement affectent une priorité élevée à la station sans fil, le signal réservant le support sans fil est transmis avec une puissance de transmission supérieure à celle pour laquelle les informations d'abonnement affectent une priorité inférieure à la station sans fil.

8. Procédé de commande de puissance selon l'une quelconque des revendications 1 à 7, dans lequel lesdites exigences de qualité de service sont dérivées au moins en partie des caractéristiques desdites données.

9. Station sans fil (500) comprenant :
un émetteur (501) pour émettre un signal (201, 202) réservant localement un support sans fil en vue de la communication de données vers ou depuis la station sans fil, dans lequel la zone dans laquelle le support sans fil est réservé correspond à la zone dans laquelle ledit signal réservant le support sans fil peut être reçu, **caractérisée en ce que** la station sans fil comprend en outre un montage de circuits de traitement de données numériques (503) exploitable connecté à l'émetteur et apte à sélectionner une puissance de transmission en vue de la transmission dudit signal sur la base d'exigences de qualité de service associées à ladite communication de données.

10. Station sans fil selon la revendication 9, dans laquelle ledit signal (201) est adressé à une seconde station sans fil et indique que la station sans fil souhaite transmettre des données à la seconde station sans fil.

11. Station sans fil selon la revendication 10, dans laquelle ledit signal est une trame de commande « Invitation à émettre » selon les normes IEEE 802.11 (201).

12. Station sans fil selon la revendication 9, dans laquelle ledit signal (202) indique que la station sans fil est prête à recevoir des données en provenance d'une seconde station sans fil.

13. Station sans fil selon la revendication 12, dans laquelle ledit signal est une trame de commande « Prête à émettre » selon les normes IEEE 802.11 (202).

14. Station sans fil selon l'une quelconque des revendications 12 et 13, dans laquelle ladite station sans fil comprend en outre un récepteur (502) et ledit signal (202) indiquant que la station sans fil est prête à recevoir des données en provenance de la seconde station sans fil est transmis en réponse à la réception d'un signal (201), par le récepteur, en provenance de la seconde station sans fil indiquant que la seconde station sans fil souhaite transmettre des données à la station sans fil.

15. Station sans fil selon l'une quelconque des revendications 9 à 14, dans laquelle lesdites exigences de qualité de service sont dérivées, au moins en partie, d'informations d'abonnement, dans lesquelles, si les informations d'abonnement affectent une priorité élevée à la station sans fil, le signal réservant le support sans fil est transmis avec une puissance de transmission supérieure à celle pour laquelle les informations d'abonnement affectent une priorité inférieure à la station sans fil.

16. Station sans fil selon l'une quelconque des revendications 9 à 15, dans laquelle lesdites exigences de qualité de service sont dérivées au moins en partie des caractéristiques desdites données.
